# EUROPÄISCHE PATENTSCHRIFT

(11) **EP 1 636 461 B1**
(45) Veröffentlichungstag und Bekanntmachung des Hinweises auf die Patenterteilung: **29.11.2006**
(21) Anmeldenummer: 04739415.0
(22) Anmeldetag: 27.05.2004
(51) Int. Cl.: F01D 5/08, F04D 29/58, F01D 25/10

(54) **STRÖMUNGSMASCHINE, INSBESONDERE GASTURBINE**
TURBOMACHINE, IN PARTICULAR GAS TURBINE
TURBOMACHINE, EN PARTICULIER TURBINE A GAZ

(30) Priorität: 16.06.2003 EP 03013648
(43) Veröffentlichungstag der Anmeldung: 22.03.2006
(73) Patentinhaber: SIEMENS AKTIENGESELLSCHAFT, 80333 München (DE)
(72) Erfinder: MINNINGER, Dieter, 46535 Dinslaken (DE)
(86) Internationale Anmeldenummer: PCT/EP2004/005754
(87) Internationale Veröffentlichungsnummer: WO 2004/113684

(56) Entgegenhaltungen:
- DE-A- 3 909 606
- DE-A- 4 411 616
- GB-A- 2 112 461
- US-A- 5 271 711
- US-B1- 6 267 553
- US-B1- 6 382 903

## Beschreibung

Die vorliegende Erfindung betrifft eine Strömungsmaschine, insbesondere Gasturbine mit einem Verdichter, mit einer in einem Gehäuse der Strömungsmaschine drehbar gelagertem Rotor, mit einem in dem Rotor angeordneten Zuführkanal zur Zuführung eines Fluids und mit einem in dem Rotor angeordneten Abführkanal zum Abführen des Fluids. Sie betrifft ferner ein Verfahren zur Beschleunigung einer Temperaturänderung eines in einer Strömungsmaschine drehbar gelagerten Rotors.

Der stationäre Betrieb von Strömungsmaschinen, insbesondere Gasturbinen, ist im Stand der Technik bekannt. Im Bestreben einen hohen Wirkungsgrad zu erreichen, sind beispielsweise moderne Gasturbinen hinsichtlich ihrer Konstruktion mit möglichst kleinen Radialspalten zwischen den rotierenden und den drehfest angeordneten Elementen konstruiert, beispielsweise zwischen einer Innenwand des Strömungskanals einer Gasturbine und an einem Rotor der Gasturbine angeordneten Laufschaufeln oder zwischen dem Rotor und an der Innenwand des Strömungskanals angeordneten Leitschaufeln.

Zur Einstellung des Radialspaltes zeigt die DE 44 11 616 ein Heiz-/Kühlsystem für einen Rotor einer Strömungsmaschine. Die Temperatur des Rotors wird während des transienten Betriebs der Strömungsmaschine angepasst, in dem über das Ansteuern externer Ventile ein temperaturbehaftetes Fluid den Rotor durchströmen kann.

Ferner ist aus der US 5,271,711 eine Rotorkühlung für eine Gasturbine bekannt. Entlang des Rotors erstreckt sich ein Ringraum, in dem Kühlluft vom verdichterseitigen Ende des Rotors zum brennkammerseitigen Ende geführt wird. Der Ringraum weist an seiner äußeren Begrenzung Kühlluftöffnungen auf, um Kühlluft in die von Rotorscheiben gebildeten Zwischenräume zu führen. Während des Lastbetriebs der Gasturbine kühlt die Kühlluft die Zwischenräume der Rotorscheiben.

Auch ist aus der DE 665 762 oder der DE 3909606 die Rotorscheibenkühlung einer Gasturbine während des Lastbetriebs bekannt.

Darüber hinaus ist bekannt, dass die Grenzen für die Reduzierung der Radialspalte durch das Warmstartproblem festgelegt sind. Das Warmstartproblem tritt auf, wenn beim Herunterfahren, also während der Abkühlphase, einer Gasturbine diese im noch nicht vollständig ausgekühlten Zustand erneut gestartet wird. Der Rotor kann dabei sich im Strömungskanal festklemmen, da sich das Gehäuse schneller abkühlt als der Rotor mit den an ihm angeordneten Laufschaufelrädern und Laufschaufeln. Den thermisch bedingten Reduzierungen der Abmessungen des Gehäuses kann der noch warme, sich langsamer abkühlende Rotor nicht folgen. Bei zu gering bemessenen Radialspalten wird daher der noch nicht vollständig abgekühlte Rotor nach Wiederanfahren der Gasturbine durch die auf Grund der Fliehkraftdehnungen sich verlängernden Schaufeln festgeklemmt. Dies führt nicht nur zur Verhinderung der Drehbarkeit des Rotors, sondern darüber hinaus auch zu kostspieligen Beschädigungen an der Gasturbine. Ferner werden die Betriebszeiten der Gasturbine verringert, da nach dem Ende der Befeuerung der Gasturbine erst die vorgegebene Abkühlphase abgewartet werden muss, ehe ein erneuter Start der Gasturbine schadlos durchgeführt werden kann.

Zu groß bemessene Radialspalte führen dagegen zu einem unerwünscht geringen Wirkungsgrad der Gasturbine, da das Prozessgas im Strömungskanal in nicht zu vernachlässigender Weise durch die Radialspalte strömt, ohne wenigstens einen Teil seiner Energie bestimmungsgemäß an die Schaufeln zu übertragen.

Bei Gasturbinen kommt dieser Nachteil besonders zum Tragen, weil hier im Strömungskanal hohe Temperaturen vorherrschen.

Aber auch andere Strömungsmaschinen wie Kompressoren, Dampfturbinen und dergleichen sind hiervon betroffen.

Insbesondere das Herunterfahren sowie das Anfahren einer Gasturbine erfordern aufgrund konstruktiver Auslegungen eine besondere Verfahrensweise, da sich das Gehäuse der Turbine sowie auch die Rotorwelle mit den an ihr angeordneten Elementen mit unterschiedlicher Geschwindigkeit an thermische Veränderungen anpassen. Eine besondere Aufmerksamkeit ist daher dem Herunterfahren einer Gasturbine wegen der oben ausgeführten Problematik zu widmen. Hieraus ergeben sich besondere Erfordernisse, die es zu beachten gilt, um eine Beschädigung der Gasturbine zu vermeiden, so unter anderem eine Mindestgröße der Radialspalte.

Es sind einerseits hinreichend große Radialspalte vorzusehen, um ein sogenanntes Einschnüren der Rotorwelle mit den an ihr angeordneten Elementen, welches zum Festklemmen des Läufers im Gehäuse führt, zu vermeiden. Andererseits führen große Radialspalte zu der bereits erwähnten Reduzierung des Wirkungsgrads der Gasturbine. Ein weiterer wichtiger Aspekt ist hinsichtlich der Wartung der Turbine zu berücksichtigen, da eine Wartung erst nach Abschluss der Abkühlphase der Gasturbine insgesamt durchgeführt werden kann. In der Regel beträgt die Zeitdauer zwischen dem Ende der Befeuerung der Gasturbine und dem Beginn der Wartungsarbeiten ca. 24 Stunden. Während des Herunterfahrens wird die Rotorwelle bei einer reduzierten Drehzahl fortwährend gedreht, beispielsweise mit einer Drehzahl von ca. 120 Umdrehungen pro Minute, um die Abkühlphase zu verkürzen.

Der Erfindung liegt nunmehr die Aufgabe zugrunde, eine Vorrichtung und ein Verfahren anzugeben, mit der das Spaltmaß der Radialspalte der Strömungsmaschine zur Erzielung eines höheren Wirkungsgrads verringert wird. Darüber hinaus ist es Aufgabe der Erfindung, eine Strömungsmaschine mit einer verringerten Standzeit und Abkühlphase anzugeben.

Zur Lösung der erstgenannten Aufgabe bezogen auf eine eingangs genannte Strömungsmaschine wird mit der vorliegenden Erfindung vorgeschlagen, dass die Einspeiseöffnung des Zuführkanals radial weiter innen liegt als die Auslassöffnung des Abführkanals und dass das Mittel zur Beeinflussung der Fluidströmung durch eine fliehkraftabhängige Betätigungsanordnung gebildet ist.

Mit der vorliegenden Erfindung kann erstmals erreicht werden, dass auf den thermischen Zustand des Rotors der Strömungsmaschine, d.h. der Rotorwelle nebst den daran angeordneten Elementen, Einfluss genommen werden kann, unabhängig von einer Strömung des Arbeitsfluids der Strömungsmaschine. Während des Herunterfahrens wird der Rotor bei vergleichsweise geringer Drehzahl zum Abkühlen der Strömungsmaschine angetrieben, so dass anstelle des Arbeitsfluids im Strömungskanal ein vergleichsweise geringer Strom strömt, der den Rotor lediglich äußerlich kühlt. Dabei sind die Druckverhältnisse im Strömungskanal gegenüber dem Lastbetrieb derart verändert, dass der von der Drehzahl des Rotors abhängige innere Fluidstrom nur vergleichsweise schwach den Rotor durchströmt. Mit der Erfindung kann nun ein Fluid zur Anpassung der Rotortemperatur dem Rotor zugeführt werden, welches den Rotor während des Herunterfahrens wirksam kühlt. Da die Einspeiseöffnung des Kühlfluids radial weiter innen liegt als die Auslassöffnung, herrschen an der Auslassöffnung größere Umfangsgeschwindigkeiten als an der Einspeiseöffnung, so dass an den Auslassöffnungen im Strömungskanal ein Sog entsteht, der einen Fluidstrom durch den Rotor erzeugt. Darüber hinaus strömt das Fluid im Innern des Rotors durch die auf das Fluid wirkende Fliehkraft gemäß einer Zentrifuge nach außen, welches die Strömung des Fluids im Innern des Rotors nach außen zusätzlich bescheunigt.

Durch die beim Drehbetrieb verbesserte Kühlung des Rotors kühlt dieser schneller ab, wodurch seine thermischen Dehnungen gleichfalls schneller reduziert werden. Dadurch kann eine Temperierung des Rotors erreicht werden, die mit einer zugehörigen Gehäusetemperatur korrespondiert, was eine kleinere Dimensionierung der konstruktiv bedingten Radialspalte ermöglicht und so den Wirkungsgrad der Strömungsmaschine bei Lastbetrieb erhöht. Energiekosten können eingespart werden und die Energieausbeute kann erhöht werden. Besonders vorteilhaft wirkt sich die Erfindung bei Gasturbinen aus, da hier besonders hohe Temperaturen sowie daraus resultierend hohe Temperaturdifferenzen auftreten. Darüber hinaus kann eine im Vergleich zum Stand der Technik verkürzte Abkühlphase vor einem erneuten Warmstart der Strömungsmaschine erreicht werden. Eine Beschleunigung der Temperaturänderung des Rotors kann erreicht werden.

Eine besonders einfache Steuerung des Fluidstroms ist durch eine selbsttätige fliehkraftgesteuerte Betätigungsanordnung gegeben. Diese kann beispielsweise als Abdichtelement, Absperrelement oder dergleichen ausgebildet sein. Mit der Betätigungsanordnung zur Beeinflussung der Fluidströmung kann die Fluidzufuhr innerhalb der Rotorwelle beeinflusst werden. Es können auch mehrere Absperrelemente vorgesehen sein, um zu temperierende Stellen wunschgemäß und unabhängig voneinander zu temperieren. Es besteht die Möglichkeit, axial beabstandete Bereiche in der Strömungsmaschine mit einer unterschiedlichen Fluidmenge zu versorgen, um eine axial unterschiedliche Temperaturbeanspruchung berücksichtigen zu können.

Unterschreitet der Rotor während des Herunterfahrens eine Grenzdrehzahl, so öffnet die Betätigungsanordnung den Zuführkanal, so dass ein Fluidstrom sich einstellen kann. Während des Lastbetriebs der Strömungsmaschine verschließt die Betätigungsanordnung den Zuführungskanal, da sonst infolge des im Strömungskanal herrschenden Druckniveaus ein Fluidstrom von Abführkanal durch den Rotor zum Einlasskanal als Leckage des Strömungsmediums strömen würde.

Auch im umgekehrten Betriebsfall, beim Hochfahren einer Gasturbine, kann mit der erfindungsgemäßen Vorrichtung das Anfahren vorteilhaft unterstützt werden, indem die Rotorwelle mit den daran angeordneten Elementen schneller auf eine entsprechende Temperatur gebracht wird. Bei Überschreitung einer weiteren vorgebbaren Drehzahl der Rotorwelle kann die Betätigungsanordnung die Fluidzufuhr sperren. Die vorgebbare Drehzahl kann für beide Vorgänge gleich oder auch unterschiedlich gewählt sein.

In einer weiteren Ausgestaltung wird vorgeschlagen, dass das Mittel zur Beeinflussung der Fluidströmung über einen zwischen Laufschaufelrädern und einem die Rotorwelle axial durchragenden Element gebildeten Spalt mit einem Abführkanal verbunden ist. Insbesondere bei Gasturbinen größerer Bauart weist die Rotorwelle axial angeordnete Laufschaufelräder auf, die beispielsweise von einem Zuganker oder dergleichen axial durchragt werden. Zwischen dem Zuganker und den Laufschaufelrädern können jeweils Spalte gebildet werden, durch die das Fluid an die zu temperierenden Stellen gelangt. Zusätzliche Kanäle für Fluid können eingespart werden. Die Kanäle können jedoch auch Kühlkanäle eines in der Strömungsmaschine implementierten Kühlsystems sein.

Weiterhin wird vorgeschlagen, dass der Abführkanal ein Drosselelement aufweist. Mit dem Drosselelement kann eine bedarfsgerechte Zuführung des Fluids erreicht werden. Darüber hinaus bewirkt die Anordnung von Drosselelementen, dass das Fluid auf die zu temperierenden Stellen bestimmungsgemäß verteilt wird. Steuerungs- und Regelungsmittel zur Fluidzuführung können eingespart werden. Ferner schafft diese Ausgestaltung eine hohe Zuverlässigkeit, da sie ohne bewegliche Teile auskommt. Der Wartungsaufwand kann gering gehalten werden.

In einer weiteren Ausgestaltung wird vorgeschlagen, dass der Abführkanal in den Strömungskanal der Strömungsmaschine mündet. Zusätzliche Abführmittel zur Abführung des Fluids nach dem Durchströmen der zu temperierenden Stelle können eingespart werden. Vorteilhaft kann die Erfindung auch bei bereits bestehenden Strömungsmaschinen mit geringem Aufwand vorgesehen werden.

In einer vorteilhaften Weiterbildung wird vorgeschlagen, dass zum Abführen des Fluids aus dem Rotor der Abführkanal zwischen an der Rotorwelle angeordneten Laufschaufelrädern in den Strömungskanal mündet. Zusätzliche konstruktive Maßnahmen zur Abführung des Fluids können eingespart werden. Eine einfache Implementierung der Vorrichtung in bereits bestehende Konstruktionen kann erreicht werden.

Falls die Strömungsmaschine als Gasturbine mit einem Verdichter ausgebildet ist, kann die Zuführung am verdichterseitigen Ende der Rotorwelle vorgesehen sein. Somit kann besonders einfach kühles Fluid aus dem Einströmbereich des Verdichters zur Kühlung des Rotors entnommen werden.

Mit der Erfindung wird ferner ein Verfahren zum Kühlen eines von einem Kühlfluid durchströmbaren Rotors einer Strömungsmaschine, insbesondere Gasturbine mit einem Verdichter, vorgeschlagen, wobei während eines sich an den Lastbetrieb der Gasturbine anschließenden Drehbetriebs ein Fluid zur Kühlung des Rotors diesen Rotor durchströmt und diese Fluidströmung während des Last Getriebs verhindert wird.

Durch die Kühlung kann die Abkühlphase der Strömungsmaschine erheblich verkürzt werden. Dies führt bei Wartungsarbeiten zu einer Reduzierung von Standzeiten sowie damit verbundenen Kosten. Darüber hinaus kann die Verfügbarkeit der Strömungsmaschine deutlich erhöht werden. Ferner kann die Gefahr eines Festklemmens des Rotors einer Gasturbine bei einem Warmstart sowie dadurch verursachte Beschädigungen weiter reduziert werden. Gerade bei geringer Drehzahl der Rotorwelle ist oftmals eine Kühlwirkung eines in der Strömungsmaschine implementierten Kühlsystems nicht ausreichend. Hier kann durch die vorliegende Lösung Abhilfe geschaffen werden.

Die Rotorwelle kann somit erheblich zügiger als bisher üblich auf eine gewünschte Temperatur gebracht werden. Die Erfindung kann auch zum Temperieren, das heißt Einstellen der Temperatur, der gesamten Rotorwelle und/oder der an ihr angeordneten Elemente wie Laufschaufeln und dergleichen verwendet werden.

In einer weiteren Ausgestaltung wird vorgeschlagen, dass während eines vor dem Lastbetrieb der Strömungsmaschine durchgeführten Anlaufbetriebs eine Fluidströmung zur Beheizung des Rotors diesen Rotor durchströmt. So ist es beispielsweise möglich, eine bei sehr niedrigen Temperaturen gelagerte Strömungsmaschine während des Anlaufbetriebs zu beheizen, was eine schnelle Erwärmung des Rotors ermöglicht.

Um beispielsweise das Anfahren einer Strömungsmaschine mit einem vorgebbaren Wirkungsgrad weiter zu verbessern, wird vorgeschlagen, dass während eines vor dem Lastbetrieb der Gasturbine durchgeführten Anlaufbetriebs eine Fluidströmung zur Beheizung der Rotorwelle ermöglicht wird und dass die Mittel die Fluidströmung dergestalt steuern, dass während des Lastbetriebs der Strömungsmaschine eine Fluidströmung verhindert wird. So kann vorteilhaft die Temperatur der Rotorwelle und der an ihr angeordneten Elemente an die Temperatur des Gehäuses angeglichen werden. Die konstruktiv vorgesehenen Radialspalte zwischen rotierenden und nicht rotierenden Elementen können weiter reduziert werden. Darüber hinaus kann auch hier die Gefahr des Festklemmens reduziert und eine durch den Rotor strömende Leckage im Arbeitsmedium verhindert werden.

Es wird ferner vorgeschlagen, dass als Fluid Luft verwendet wird. Durch die Verwendung von Luft steht ein kostengünstiges Fluid zur Verfügung, welches zum Temperieren, sowohl Kühlen als auch Beheizen, verwendet werden kann. Insbesondere bei Gasturbinen, die bereits ein für Luft vorgesehenes Kühlsystem aufweisen, kann dieses Kühlsystem auch für das erfindungsgemäße Verfahren genutzt werden. Darüber hinaus hat Luft gegenüber anderen Fluiden den Vorteil, dass bei konventionellen Gasturbinen keine besonderen Anforderungen hinsichtlich physikalischer oder chemischer Beanspruchungen zu berücksichtigen sind.

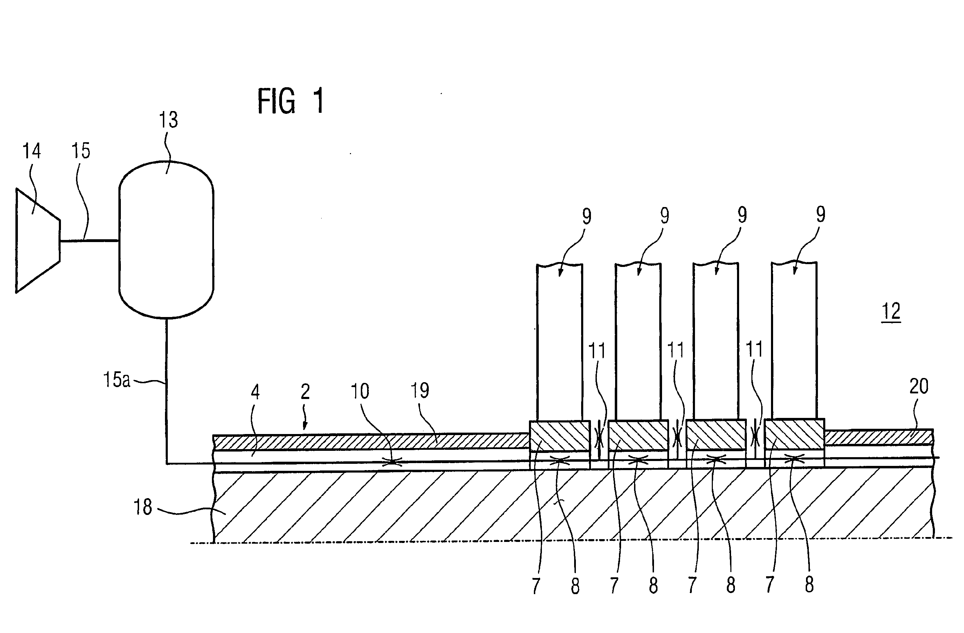

Weitere Vorteile und Merkmale sind der folgenden Beschreibung von Ausführungsbeispielen zu entnehmen. Im wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel in Fig. 1 verwiesen.

Es zeigen:
- Fig. 1:: ein schematisches Schaltbild einer erfindungsgemäßen Luftversorgung für eine Gasturbine und
- Fig. 2:: eine teilweise geschnittene Ansicht einer Gasturbine mit einer erfindungsgemäßen Kühlluftversorgung.

In Fig. 1 ist schematisch ein Kompressor 14 dargestellt, der Luft ansaugt, komprimiert und über eine Leitung 15 einem Drucklufttank 13 zuführt. Der Drucklufttank 13 ist über eine Leitung 15a mit einem in der Rotorwelle 2 angeordneten Zuführkanal 4 strömungstechnisch verbunden. Der Zuführkanal 4 endet an einem Absperrelement 10, welches in Abhängigkeit von der Drehzahl der Rotorwelle 2 über einen nicht weiter dargestellten, in der Rotorwelle 2 angeordneten Betätigungsmechanismus betätigt wird. Das Absperrelement 10 ist ferner mit weiteren durch Spalten 8 gebildeten Kanälen verbunden, die ihrerseits mit Drosselelementen 11 strömungstechnisch in Verbindung stehen. Die Ausgänge der Drosselelemente 11 münden zwischen Laufschaufelrädern 7 in den Strömungskanal 12 der Gasturbine 3.

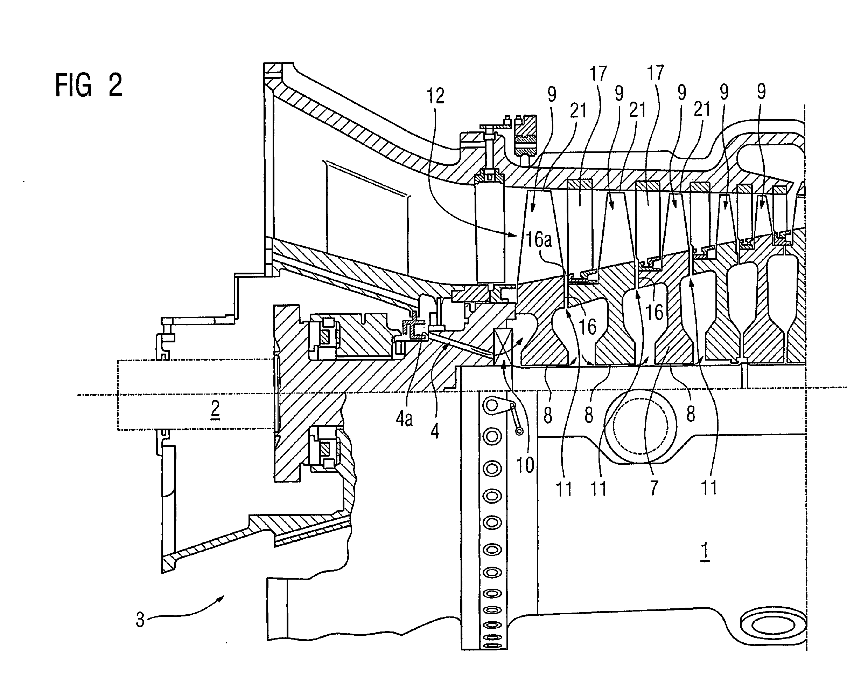

Fig. 2 zeigt in einer teilweise geschnittenen Ansicht einen Ausschnitt einer Gasturbine 3 im Bereich des Verdichtereintritts. Die Gasturbine 3 weist ein Gehäuse 1 und einer darin drehbar gelagerten Rotorwelle 2 auf. In einem Verdichter sind zwischen den an Laufschaufelrädern 7 angeordneten Laufschaufeln 9 mit dem Gehäuse verbundene Leitschaufeln 17 angeordnet. In der Rotorwelle 2 ist ein steuerbares Absperrelement 10 angeordnet, welches über einen eine Einspeiseöffnung 4a aufweisenden Zuführkanal 4, der ebenfalls in der Rotorwelle 2 angeordnet ist, mit Kühlluft versorgbar ist. Über ein nicht näher dargestelltes von einer Zentrifugalkraft gesteuertes Betätigungselement ist das Absperrelement 10 zwischen dem offenen Zustand und dem geschlossenen Zustand umschaltbar. Das Betätigungselement ist dabei derart ausgelegt, dass es das Absperrelement 10 bei Unterschreitung einer vorgebbaren Drehzahl in den geöffneten Zustand schaltet. Bei Überschreiten der vorgebbaren Drehzahl wird das Absperrelement 10 geschlossen. Alternativ können die eine Betätigung auslösenden Drehzahlen auch voneinander abweichen.

Die Rotorwelle 2 weist eine mittlere Hohlwelle 19 (Fig. 1) und eine hintere Hohlwelle 20 auf, zwischen denen die Laufschaufelräder 7 des Verdichters angeordnet sind. Nicht dargestellt ist, dass im Anschluss an die hintere Hohlwelle 20 die Laufschaufelräder 7 der Turbine folgen, welche analog zu denen des Verdichters ausgebildet sind. Mittels einem die Hohlwellen 19, 20 und die Laufschaufelräder 7 durchragenden Zuganker 18 sind die Hohlwellen 19, 20 und die Laufschaufelräder 7 drehfest miteinander in Wirkverbindung. Über mit dem Zuführkanal 4 verbundene, immanent vorhandene Spalte 8 wird die Kühlluft vom Absperrelement 10 zu den Drosselelementen 11 geführt. Die im Verdichter angeordneten Drosselelemente 11 sind derart ausgebildet, dass die Drosselwirkung mit zunehmender axialer Entfernung vom Absperrelement 10 abnimmt, um so Druckverluste in der Zuführung der Kühlluft über die Spalten 8 auszugleichen. An die Drosseln 11 schließen sich zwischen den Laufschaufelräder 7 angeordnete Abführkanäle 16 an, die über ihre Auslassöffnung 16a die Kühlluft in den Strömungskanal 12 der Gasturbine 3 führen. Über den Strömungskanal 12 wird die Kühlluft abgeführt.

Die Auslassöffnungen 16a der Abführkanäle 16 sind radial weiter außen angeordnet als die Einspeiseöffnungen 4a des Zuführkanals 4.

Um ein Herunterfahren der Gasturbine 3 aus einem energieerzeugenden Betriebszustand zu ermöglichen, wird zunächst die Brennstoffzufuhr der Gasturbine 3 abgeschaltet.

Mit abnehmender Drehzahl nimmt auch die Eigenkühlung der Gasturbine 3 ab und die Druckverhältnisse im Verdichter als auch in der Turbine ändern sich wesentlich. Unterschreitet die Rotorwelle 2 die vorgegebene Drehzahl, so schaltet das Absperrelement 10 über das Betätigungselement auf Durchgang um, damit die Luft durch den Zuführkanal 4, über die Spalten 8 zu den Drosselelementen 11 gelangt. Die Drosselelemente 11 bewirken eine axiale Druckverteilung im Verdichter, so dass je weiter weg die Laufschaufelräder 7 des Verdichters vom Betätigungselement entfernt sind, diese um so mehr mit Kühlluft beaufschlagt werden können. In der Turbine werden die vom Betätigungselement weiter weg entfernten Laufschaufelräder 7 mit weniger Kühlluft beaufschlagt als die näheren. So werden die beim Gasturbinenbetrieb thermisch höher belasteten brennkammernahen Rotorscheiben beim Drehbetrieb bevorzugt gekühlt. Von den Drosselelementen 11 gelangt die Luft über zwischen benachbarten Laufschaufelrädern 7 angeordnete Abströmkanäle 16 in den Strömungskanal 12 der Gasturbine 3.

Während des Herunterfahrens bewirkt die Zentrifugalkraft ein Beschleunigung der Luft im Rotor nach außen. Die Luft strömt an den Laufschaufelrädern 7 vorbei, nimmt dabei die Rotorwärme auf und verlässt den Rotor durch die Auslassöffnungen 16a. Dabei saugt die abströmende Luft durch das offene Betätigungselement neue, kühlere und noch nicht erwärmte Luft durch die Einspeiseöffnung 4a an. Die Sogwirkung wird weiter verstärkt durch die an der Auslassöffnung 16a sich einstellende Umfangsgeschwindigkeit, welche größer ist als die an der Einspeiseöffnung 4a. Dies gewährleistet ein zuverlässiges Abführen der erwärmten Kühlluft und ein ausreichendes Nachströmen von neuer, unverbrauchter Kühlluft, unabhängig von dem Vorhanden sein einer möglichen externen Druckluftversorgung oder nicht.

Aufgrund der Kühlwirkung kann die Abkühlphase bzw. das Herunterfahren bis zur Durchführung von Wartungsarbeiten oder bis zu einem erneuten Warmstart erheblich verkürzt werden. Ferner können darüber hinaus die Radialspalte 21 erheblich kleiner ausgebildet werden, da eine Gefahr des Festklemmens durch ein schnelleres Abkühlen des Gehäuses 1 gegenüber der Rotorwelle 2 durch die erfindungsgemäße Kühlung verhindert wird. Die Rotorwelle 2 nebst den an ihr angeordneten Elemente kann somit der Abkühlung des Gehäuses 1 folgen. Dies wirkt sich darüber hinaus auch vorteilhaft beim Anfahren der Gasturbine 3 aus.

Die in den Figuren dargestellten Ausführungsbeispiele dienen lediglich der Erläuterung der Erfindung und sind für diese nicht beschränkend. So können insbesondere die Anordnung der Kanäle sowie auch des Absperrelements oder auch die Anzahl der Kanäle und Absperrelemente bedarfsgerecht variiert werden, ohne den Schutzbereich der Erfindung zu verlassen. Auch eine Verwendung anderer Fluide als Luft wie beispielsweise Stickstoff, Kohlendioxid oder auch flüssige Fluide kann vorgesehen sein, ohne den Schutzbereich der Erfindung zu verlassen. Insbesondere ist auch eine Kombination eines bereits vorhandenen Kühlsystems mit der vorliegenden Erfindung umfasst.

Darüber hinaus ist die vorliegende Erfindung nicht auf die Anwendung bei Gasturbinen beschränkt. Sie kann selbstverständlich auch bei Dampfturbinen, Kompressoren und dergleichen zum Einsatz kommen.

## Patentansprüche

1. Strömungsmaschine (3), insbesondere Gasturbine mit einem Verdichter,
mit einer in einem Gehäuse (1) der Strömungsmaschine (3) drehbar gelagertem Rotor (2),
mit einem in dem Rotor (2) angeordneten Zuführkanal (4) zur Zuführung eines Fluids und
mit einem in dem Rotor (2) angeordneten Abführkanal (16) zum Abführen des Fluids,
wobei die Zuführung Mittel (10) zur Beeinflussung der Fluidströmung aufweist,
**dadurch gekennzeichnet, dass**
die Einspeiseöffnung (4a) des Zuführkanals (4) radial weiter innen liegt als die Auslassöffnung (16a) des Abführkanals (16) und
dass das Mittel (10) zur Beeinflussung der Fluidströmung durch eine fliehkraftabhängige Betätigungsanordnung gebildet ist.

2. Strömungsmaschine nach Anspruch 1,
**dadurch gekennzeichnet, dass**
das Mittel (10) zur Beeinflussung der Fluidströmung über einen zwischen Laufschaufelrädern (7) und einem die Rotorwelle (2) axial durchragendem Element (18) gebildeten Spalt (8) mit dem Abführkanal (16) verbunden ist.

3. Strömungsmaschine nach Anspruch 1 oder 2,
**dadurch gekennzeichnet, dass**
der Abführkanal (16) ein Drosselelement (11) aufweist.

4. Strömungsmaschine nach Anspruch 1, 2 oder 3,
**dadurch gekennzeichnet, dass**
der Abführkanal (16) in den Strömungskanal (12) der Strömungsmaschine (3) mündet.

5. Strömungsmaschine nach Anspruch 4,
**dadurch gekennzeichnet, dass**
zum Abführen des Fluids aus dem Rotor der Abführkanal (16) zwischen an der Rotorwelle (2) angeordneten Laufschaufelrädern (7) in den Strömungskanal (12) mündet.

6. Strömungsmaschine nach Anspruch 4,
**dadurch gekennzeichnet, dass**
die Strömungsmaschine als Gasturbine mit einem Verdichter ausgebildet ist, wobei die Zuführung am verdichterseitigen Ende der Rotorwelle vorgesehen ist.

7. Verfahren zum Kühlen eines von einem Kühlfluid durchströmbaren Rotors einer Strömungsmaschine, insbesondere Gasturbine mit einem Verdichter,
bei dem während des Lastbetriebs der Strömungsmaschine eine Strömung des Kühlfluids verhindert wird und während eines sich an den Lastbetrieb der Strömungsmaschine anschließenden Drehbetriebs das Kühlfluid zur Kühlung des Rotors diesen durchströmt.

8. Verfahren zum Beheizen eines von einem Heizfluid durchströmbaren Rotors einer Strömungsmaschine, insbesondere Gasturbine mit einem Verdichter,
bei dem während eines vor dem Lastbetrieb der Strömungsmaschine durchgeführten Anlaufbetriebs das Heizfluid zur Beheizung des Rotors diesen durchströmt und während des Lastbetriebs der Strömungsmaschine eine Strömung des Heizfluids verhindert wird.

9. Verfahren nach einem der vorherigen Verfahrensansprüche,
**dadurch gekennzeichnet,**
**dass** als Kühlfluid oder Heizfluid Luft verwendet wird.

## Claims

1. Turbomachine (3), in particular a gas turbine with a compressor, having a rotor (2) rotatably mounted in a casing (1) of the turbomachine (3), having a feed passage (4) arranged in the rotor (2) and intended for feeding a fluid, and having a discharge passage (16) arranged in the rotor (2) and intended for discharging the fluid, the feed having means (10) for influencing the fluid flow, **characterized in that** the feeding opening (4a) of the feed passage (4) lies radially further on the inside than the outlet opening (16a) of the discharge passage (16), and **in that** the means (10) for influencing the fluid flow is formed by an actuating arrangement dependent upon centrifugal force.

2. Turbomachine according to Claim 1, **characterized in that** the means (10) for influencing the fluid flow is connected to the discharge passage (16) via a gap (8) formed between moving-blade wheels (7) and an element (18) projecting axially through the rotor shaft (2).

3. Turbomachine according to Claim 1 or 2, **characterized in that** the discharge passage (16) has a throttle element (11).

4. Turbomachine according to Claim 1, 2 or 3, **characterized in that** the discharge passage (16) opens into the flow passage (12) of the turbomachine (3).

5. Turbomachine according to Claim 4, **characterized in that**, to discharge the fluid from the rotor, the discharge passage (16) opens into the flow passage (12) between moving-blade wheels (7) arranged on the rotor shaft (2).

6. Turbomachine according to Claim 4, **characterized in that** the turbomachine is designed as a gas turbine with a compressor, the feed being provided at the compressor-side end of the rotor shaft.

7. Method of cooling a rotor, through which a cooling fluid can flow, of a turbomachine, in particular a gas turbine with a compressor, in which a flow of the cooling fluid is prevented during the load operation of the turbomachine, and the cooling fluid for cooling the rotor flows through the latter during a rotary operation following the load operation of the turbomachine.

8. Method of heating a rotor, through which a heating fluid can flow, of a turbomachine, in particular a gas turbine with a compressor, in which the heating fluid for heating the rotor flows through the latter during a start-up operation carried out before the load operation of the turbomachine, and a flow of the heating fluid is prevented during the load operation of the turbomachine.

9. Method according to one of the preceding method claims, **characterized in that** the cooling fluid or heating fluid used is air.

## Revendications

1. Turbomachine (3), notamment turbine à gaz ayant un compresseur,
comprenant un rotor (2) monté tournant dans une carcasse (1) de la turbomachine (3)
comprenant un canal (4) d'apport, disposé dans le rotor (2) et destiné à l'apport d'un fluide et,
comprenant un canal(16) d'évacuation de fluide, disposé dans le rotor (2),
le dispositif d'apport comprenant des moyens (10) pour influer sur le courant de fluide,
**caractérisé en ce que**
l'ouverture (4a) d'alimentation du canal (4) d'apport se trouve radialement plus à l'intérieur que l'ouverture (16a) du canal (16) d'évacuation, et
**en ce que** les moyens (10) pour influer sur le courant de fluide sont formés par un dispositif d'actionnement, en fonction de la force centrifuge.

2. Turbomachine selon la revendication 1,
**caractérisé en ce** les moyens (10) pour influer sur le courant de fluide sont reliés au canal (16) d'évacuation par un intervalle (8) formé entre des roues (7) d'aube mobile et un élément (18) traversant axialement l'arbre (2) du rotor.

3. Turbomachine selon la revendication 1 ou 2, **caractérisée en ce que** le canal (16) d'évacuation a un élément (11) d'étranglement.

4. Turbomachine selon la revendication 1, 2 ou 3, **caractérisée en ce que** le canal (16) d'évacuation débouche dans le canal (12) pour le courant de la turbomachine. (3).

5. Turbomachine selon la revendication 4, **caractérisée en ce que**, pour l'évacuation du fluide du rotor, le canal (16) d'évacuation débouche dans le canal (12) pour le courant entre des roues (7) d'aube mobile montées sur l'arbre (2) du rotor.

6. Turbomachine selon la revendication 4, **caractérisée en ce que** la turbomachine est constituée en turbine à gaz ayant un compresseur, l'apport étant prévu à l'extrémité du côté du compresseur de l'arbre du rotor.

7. Procédé de refroidissement d'un rotor d'une turbomachine, dans lequel peut passer un fluide de refroidissement, notamment d'une turbine à gaz ayant un compresseur, dans lequel, pendant le fonctionnement en charge de la turbomachine, on empêche un écoulement du fluide de refroidissement et, pendant un fonctionnement en rotation faisant suite au fonctionnement en charge de la turbomachine, on fait passer le fluide de refroidissement dans le rotor pour le refroidissement de celui-ci.

8. Procédé de chauffage d'un rotor d'une turbomachine dans lequel peut passer du fluide de chauffage, notamment d'une turbine à gaz ayant un compresseur, dans lequel, pendant un fonctionnement en démarrage effectué avant le fonctionnement en charge de la turbomachine, on fait passer le fluide de chauffage du rotor dans celui-ci et, pendant le fonctionnement en charge de la turbomachine, on empêche un courant du fluide de chauffage de passer.

9. Procédé selon l'une des revendications précédentes, **caractérisé en ce** l'on utilise de l'air comme fluide de refroidissement ou comme fluide de chauffage.
